# EUROPÄISCHE PATENTSCHRIFT

(11) **EP 0 601 312 B1**
(45) Veröffentlichungstag und Bekanntmachung des Hinweises auf die Patenterteilung: **30.06.1999**
(21) Anmeldenummer: 93116903.1
(22) Anmeldetag: 20.10.1993
(51) Int. Cl.: B29C 70/00, B29B 17/00

(54) **Im Kunststoffspritzverfahren hergestelltes Kunstoffbauteil**
Injection moulded plastic part
Objet en matériau plastique moulé par injection

(30) Priorität: 07.12.1992 DE 4241172
(43) Veröffentlichungstag der Anmeldung: 15.06.1994
(73) Patentinhaber: Vorwerk & Co. Interholding GmbH, 42275 Wuppertal (DE)
(72) Erfinder: Beyer, Friedrich, D-31787 Hameln (DE); Hölzel, Klaus, D-31787 Hameln (DE); Werner, Achim, D-31787 Hameln (DE)
(74) Vertreter: Müller, Enno, Dipl.-Ing.

(56) Entgegenhaltungen:
- EP-A- 0 232 522
- DE-A- 2 722 774
- FR-A- 2 253 616
- DATABASE WPI Week 8903, Derwent Publications Ltd., London, GB; AN 89-019698 & JP-A-63 295 615 (TEIJIN) 2. Dezember 1988
- DATABASE WPI Week 8802, Derwent Publications Ltd., London, GB; AN 88-012327 ANONYMOUS & RESEARCH DISCLOSURE Bd. 284, Nr. 003 , 10. Dezember 1987
- DATABASE WPI Week 7407, Derwent Publications Ltd., London, GB; AN 74-12825V & SU-A-374 340 (TOLMACHEVA ET AL.) 23. August 1973
- DATABASE WPI Week 8530, Derwent Publications Ltd., London, GB; AN 85-180267 & JP-A-60 107 309 (IKEDA BUSSAN) 12. Juni 1985
- DATABASE WPI Week 8530, Derwent Publications Ltd., London, GB; AN 85-181298 & JP-A-60 109 806 (SEKISUI CHEM. IND.) 15. Juni 1985
- DATABASE WPI Week 8550, Derwent Publications Ltd., London, GB; AN 85-314023 & JP-A-60 219 016 (SEKISUI CHEM. IND.) 1. November 1985
- DATABASE WPI Week 8316, Derwent Publications Ltd., London, GB; AN 83-37924K & JP-A-58 041 910 (KANEBO) 11. März 1983

## Beschreibung

Die Erfindung betrifft ein Kunststoffteil mit einer rutschfesten Oberfläche und ein im Kunststoffspritzverfahren hergestelltes Kunststoffbauteil.

Aus der französischen Patentanmeldung FR-A-2 253 616 ist ein Kunststoffbauteil bekannt, das in einem Spritzgießverfahren hergestellt ist und das unverschmolzene Anteile eines Kunststoffes enthält.

Aus der EP 0 232 522 A2 ist außerdem ein in einem Spritzgießverfahren hergestelltes Bauteil bekannt, das unverschmolzene Anteile eines Kunststoffes enthält, bei denen es sich um organische Fasern handelt.

Davon ausgehend ist es Teil der Aufgabe der vorliegenden Erfindung, ein gattungsgemäßes Kunststoffbauteil mit einer hohen Festigkeit und mit einer haft- bzw. rutschfesten und insofern verbesserten Oberfläche bereitzustellen. Die Aufgabe der Erfindung beinhaltet außerdem, ein gattungsgemäßes, im Kunststoffspritzverfahren hergestelltes Kunststoffbauteil anzugeben, das bei zugleich hoher Festigkeit durch die zumindest anteilige Verwendbarkeit von rezyklierten Ausgangsstoffen kostengünstiger herstellbar ist.

Gelöst ist dies im Hinblick auf den ersten Aufgabenteil durch die in Anspruch 1 angegebene Erfindung. Eine Lösung für den zweiten Aufgabenteil wird durch die in Anspruch 2 beschriebene Erfindung angegeben, zu der die Unteransprüche 3 bis 10 vorteilhafte Weiterbildungen beschreiben.

Zufolge der in Anspruch 1 erläuterten Ausgestaltung ist ein neuartiges Kunststoffbauteil gegeben, das im wesentlichen nicht geschmolzene, hochtemperaturbeständige Kunststoff-Fasern enthält, die durch gleichfalls enthaltene niedrigschmelzende thermoplastische Anteile untereinander verbunden sind und die in dem Kunststoffbauteil im wesentlichen nicht einzeln identifizierbar sind. Erfindungsgemäß wird außerdem vorgeschlagen, daß das Kunststoffbauteil eine Vielzahl von Lufteinschlüssen aufweist, die an der Oberfläche des Kunststoffbauteils eine Vielzahl von mikroskopisch kleinen Kratern nach sich zieht. Erfindungsgemäß wird durch eine derartige Feingestaltung der Oberfläche mit einer Vielzahl von mikroskopisch kleinen Kratern die im ersten Aufgabenteil genannte Haft- bzw. Rutschfestigkeit der Oberfläche des Kunststoffbauteiles erreicht.

Ein weiterer Vorteil des Kunststoffbauteiles liegt darin, daß es eine erhöhte Stabilität aufweist. Dies ist durch in dem Kunststoffbauteil verteilt enthaltenen Anteile aus hochtemperaturbeständigem Kunststoff, beispielsweise Polyamid, erreicht, die in aller Regel zwar nicht aufgeschmolzen (gekrackt) sind, jedoch aufgrund eines Erweichungsvorgangs fein verteilt sind. Die bevorzugt eingesetzten Polyamid-Anteile weisen einen Schmelzpunkt von ca. 220°C auf. Letzterer liegt deutlich über dem des Ausgangsmaterials zur Herstellung des Kunststoffbauteiles. Als Ausgangsmaterial können hierbei Polyolefine wie beispielsweise Polypropylen, Polyethylen oder dergleichen eingesetzt werden, welche einen Schmelzpunkt von ca. 120° bis 170°C aufweisen. Bei der Herstellung des Kunststoffbauteiles wird die Wärmeeinwirkung derart gesteuert, daß die thermoplastischen Anteile auf Basis von Polyolefinen, wie beispielsweise Polypropylen und/oder Polyethylen, geschmolzen werden, nicht jedoch die Anteile auf Basis von insbesondere Polyamid. Bei einer zum Beispiel bei der Herstellung gewählten Temperatur von ca. 200°C handelt es sich hierbei um im wesentlichen unverschmolzene Polyamid-Bestandteile, welche sehr fein in der Masse verteilt sind, so daß sie auch bei mikroskopischer Vergrößerung nicht einzeln identifizierbar sind. Durch diese Anteile, insbesondere Polyamid-Anteile, die gegebenenfalls bei der oben genannten Erwärmung im Sinne eines Anschmelzens einen Erweichungsprozeß durchlaufen haben, wird eine erhöhte Stabilität des Kunststoffbauteiles erreicht. Hierbei ist besonders eine erhöhte Reißfestigkeit und Biegesteifheit des Kunststoffbauteiles erzielt. Des weiteren ist auch durch diese Ausgestaltung im Sinne der gestellten Aufgabe eine rutschfestere und mattere Oberfläche als bei aus reinen Polyolefinen, insbesondere Polypropylen oder Polyethylen, hergestellten Produkten gegeben. Bei dem so hergestellten Material sind bei einer Betrachtung im Mikroskop auffallend viele Lufteinschlüsse zu erkennen. Oberflächig führen diese zu einer entsprechenden Vielzahl von mikroskopisch kleinen Kratern, die insgesamt zu einem matten Oberflächeneffekt führen. Hierdurch ist eine mikroskopisch unregelmäßige Oberfläche des Kunststoffbauteiles gegeben, was beispielsweise bei auf diese Art hergestellten Rohren, auf welche Teppiche aufgewickelt werden, besonders von Vorteil ist. Es wird hierbei eine erhöhte Haftung des Teppichs auf dem Rohr erzielt, so daß einem Abrutschen des Teppichs von dem Teppichrohr entgegengewirkt ist. In diesem Beispiel ist auch die bereits erwähnte erhöhte Stabilität des Kunststoffbauteiles von besonderer Bedeutung, da die genannten Teppichrohre über eine freie Länge von beispielsweise 4 bis 5 m eine hohe Biegesteifigkeit aufweisen müssen.

Gegenstand der Erfindung ist im Hinblick auf die Lösung des zweiten Aufgabenteiles auch ein im Kunststoffspritzverfahren hergestelltes Kunststoffbauteil, das Anteile aus faserigem, hochtemperaturbeständigem Kunststoff, insbesondere aus Polyamid-Fasern enthält. Dabei ist vorgesehen, daß das im Kunststoffspritzverfahren hergestellte Kunststoffbauteil ein Ausgangsmaterial für das Spritzverfahren aufweist, bei dem es sich zumindest teilweise um ein rieselfähiges Granulat in Körnchenform handeln kann, das beispielsweise ausgehend von zerstückelten Teilen eines Teppichbodens erhalten wurde. Dazu kann beispielsweise ein Teppich Verwendung finden mit einem Polmaterial auf Basis von vorzugsweise Polyamid 6 oder Polyamid 6.6, vorzugsweise eines Trägermaterials aus einem Polypropylen-Vlies oder Polypropylen-Bändchen-Gewebe, weiter vorzugsweise eines Vorstriches aus Ethylen-Vinylacetat-Copolymeren, Styrol-Butadien, Styrol-Acrylat oder dergleichen, weiter vorzugsweise eines Kaschierklebers aus Polyethylen oder dergleichen und weiter vorzugsweise einer Rückenschicht auf Basis von Polyolefinen wie beispielsweise Polyethylen, Polypropylen oder dergleichen. Erfindungsgemäß ist darauf abgestellt, daß die Ausgangsstoffe für das Granulat, bei denen es sich beispielsweise um zerkleinerte Einzelstücke des oben beschriebenen Teppichbodens handeln kann, in einen Plastkompaktor gegeben werden, wobei die Einzelstücke unter Wärmeentwicklung, insbesondere unter gesteuerter Wärmeentwicklung, derart zermahlen werden, daß niedrigschmelzende thermoplastische Anteile schmelzen, während die hochtemperaturbeständigen Kunststoffanteile im wesentlichen nicht schmelzen, und daß die geschmolzenen Anteile die faserigen Anteile miteinander zu den einzelnen agglomerierten Körnchen des Granulats verbinden. Aus dem Plastkompaktor kann auf diese Weise eine granulatartige Masse erhalten werden, deren Körnchen aus durch niedrigschmelzende Kunststoffanteile untereinander verbundenen Fasern bestehen, wobei die Fasern teilweise hüllenartig von den niedrigschmelzenden thermoplastischen Kunststoffanteilen umschlossen sein können und weiterhin teilweise durch größere niedrigschmelzende thermoplastische Kunststoffanteile zu Fasergruppen zusammengeklebt sein können, welche ihrerseits durch längere Fasern in einer Wirrlage miteinander verbunden sein können. Die erhaltene granulatartige Masse dient als Ausgangsmaterial zum Herstellen des erfindungsgemäßes Kunststoffbauteiles im Kunststoffspritzverfahren. Vorzugsweise ist vorgesehen, daß dem so erhaltenen Granulat beim Spritzvorgang 40 bis 70%, vorzugsweise 70%, sortenreiner Kunststoff, insbesondere Polyethylen/Polypropylen, zugesetzt wird. Der Spritzvorgang erfolgt vorzugsweise bei einer Temperatur, bei der die faserigen, hochtemperaturbeständigen Kunststoffanteile angeschmolzen, mindestens derart erweicht werden, daß die Fasern im Zuge des Spritzvorganges zerkleinert und im Extrudat homogen verteilt werden. Weiterhin kann vorgesehen sein, daß im Zuge des Spritzvorganges die Fasern derartig zerkleinert werden, daß bei dem fertiggestellten Kunststoffbauteil keine einzeln identifizierbaren Fasern mehr erkennbar sind. Schließlich ist es noch von besonderem Vorteil, dem Granulat leitfähige Bestandteile, beispielsweise Kohlenstoff-Fasern oder metallbedampfte, leitfähige Fasern (letztere wiederum bevorzugt auf Basis Polyamid) beizumischen. Hierdurch kann das hergestellte Kunststoffbauteil leitfähig eingestellt werden, was insbesondere bei Teppichrohren von Vorteil ist. In einer vorteilhaften Ausbildung weisen die Wandungen des im Kunststoffspritzverfahren hergestellten Kunststoffbauteiles eine Vielzahl von Lufteinschlüssen auf, so daß die Oberfläche eine Vielzahl von von derartigen Lufteinschlüssen herrührenden mikroskopisch kleinen Kratern aufweist. Durch die erläuterte Feinheit der nicht einzeln identifizierbaren Fasern und/oder die mikroskopisch kleinen Krater auf den Wandoberflächen kann auch bei dem zur Lösung des zweiten Aufgabenteils vorgeschlagenen, im Spritzgußverfahren hergestellten Kunststoffbauteil eine vorteilhafte Haft- bzw. Rutschfestigkeit der Wandoberflächen erreicht werden.

Nachstehend ist die Erfindung des weiteren anhand der beigefügten Zeichnung, die jedoch lediglich Ausführungsbeispiele darstellt, erläutert. Hierbei zeigt:
- Figur 1: ein erfindungsgemäßes, im Kunststoffspritzverfahren hergestelltes Kunststoffbauteil in Form eines Teppichrohres,
- Figur 2: eine vergrößerte Ausschnittsdarstellung eines Bereiches der Wandung des Teppichrohres,
- Figur 3: einen schematisch und teilweise aufgetrennt dargestellten Teppichboden,
- Figur 4: eine schematisch dargestellte Vorrichtung zur Zerkleinerung von Teppichmaterial,
- Figur 5: eine vergrößerte, schematische Darstellung eines aus der Vorrichtung zur Zerkleinerung von Teppichmaterial gewonnenen Granulatkorns und
- Figur 6: eine schematische Darstellung einer Kunststoffspritzvorrichtung zur Herstellung eines Kunststoffbauteiles, insbesondere eines Teppichrohres.

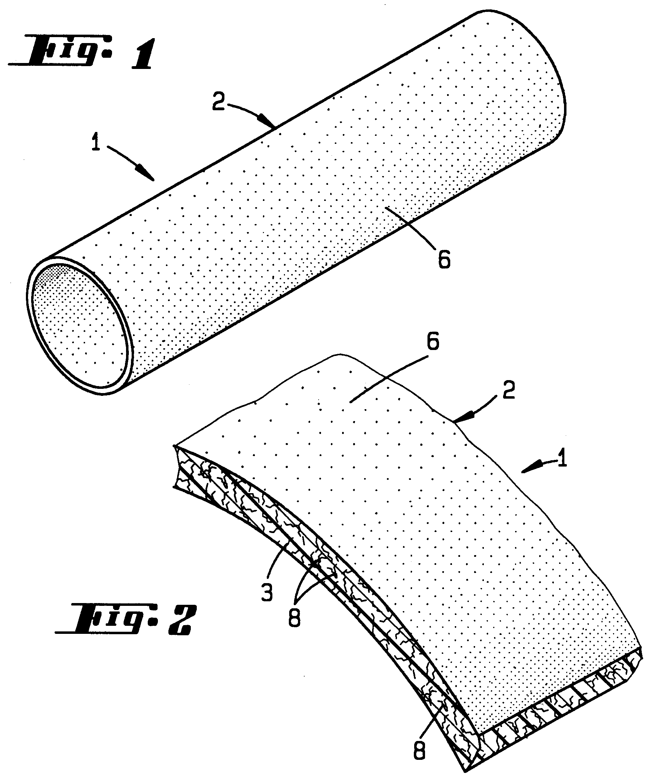

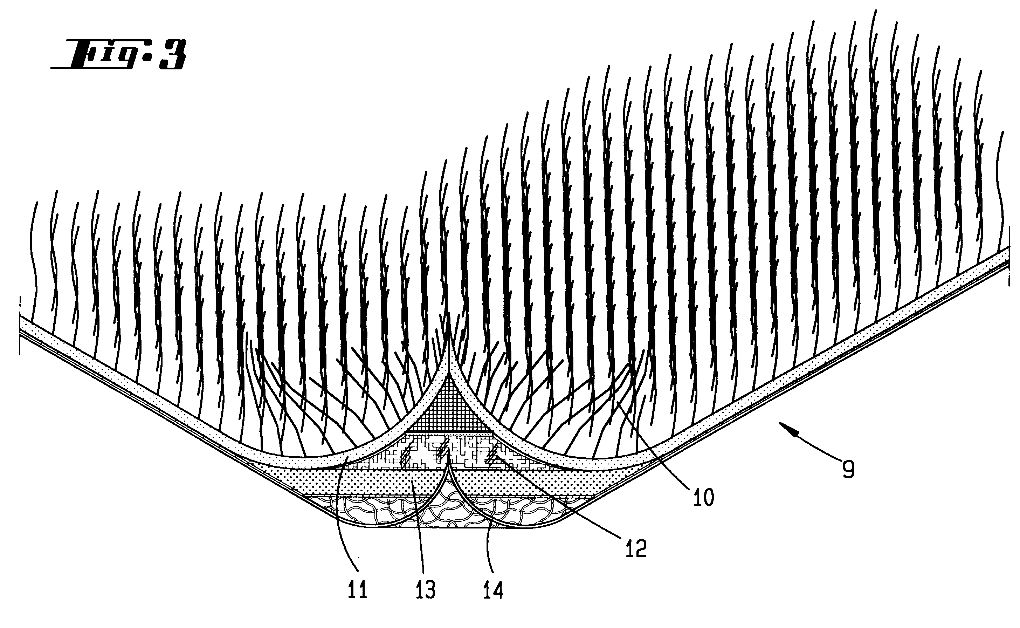

Dargestellt und beschrieben ist zunächst, mit Bezug zu Figur 1, ein Kunststoffbauteil 1, welches in diesem Ausführungsbeispiel als Teppichrohr 2 dargestellt ist. In dem Teppichrohr 2, d.h. in seiner Wandung 3, sind Anteile aus hochtemperaturbeständigem Kunststoff enthalten, die in aller Regel zwar nicht aufgeschmolzen (gekrackt) sind, jedoch aufgrund eines Erweichungsvorgangs fein verteilt sind. Letztere bestehen hierbei aus Polyamid 6 oder Polyamid 6.6. Die prozeßmäßig angeschmolzenen Polyamid-Anteile sind in der aus größtenteils niedertemperaturbeständigem Kunststoff bestehenden Wandung 3 eingelagert. Es wurde eine erhöhte Stabilität des Teppichrohres 2, insbesondere eine erhöhte Zugfestigkeit und Biegesteifigkeit beobachtet. Im Detail kann es so sein, daß die Polyamid-Anteile von dem niedertemperaturbeständigen Kunststoffanteil umschlossen sind. Bei Betrachtung unter einem Mikroskop sind in der Wandung 3 auffallend viele Lufteinschlüsse zu erkennen. Auf der Oberfläche 6 des Teppichrohres 2 führen diese zu einer entsprechenden Vielzahl von mikroskopisch kleinen Kratern, die insgesamt zu einem matten Effekt der Oberfläche 6 führen. Die punktierte Darstellung in den Figuren 1 und 2 zeigt schematisch die an der Oberfläche 6 angeordneten Krater. Hierdurch ist die Oberfläche 6 auch vergleichsweise rutschfest augebildet. Des weiteren kann die Wandung 3 des Teppichrohres 2 leitfähige Bestandteile 8 in Form von Kohlenstoff-Fasern oder metallbedampften Fasern (letztere wiederum bevorzugt auf Basis Polyamid) enthalten.

Ein derartiges Kunststoffbauteil 1, insbesondere Teppichrohr 2, kann aus einem Ausgangsmaterial in Form von Polyolefinen, wie beispielsweise Polyethylen, Polypropylen oder dergleichen, hergestellt werden, wobei diesem Ausgangsmaterial hochtemperaturbeständige Fasern 4, insbesondere Polyamid-Fasern und gegebenenfalls leitfähige Bestandteile 8 beigemengt werden.

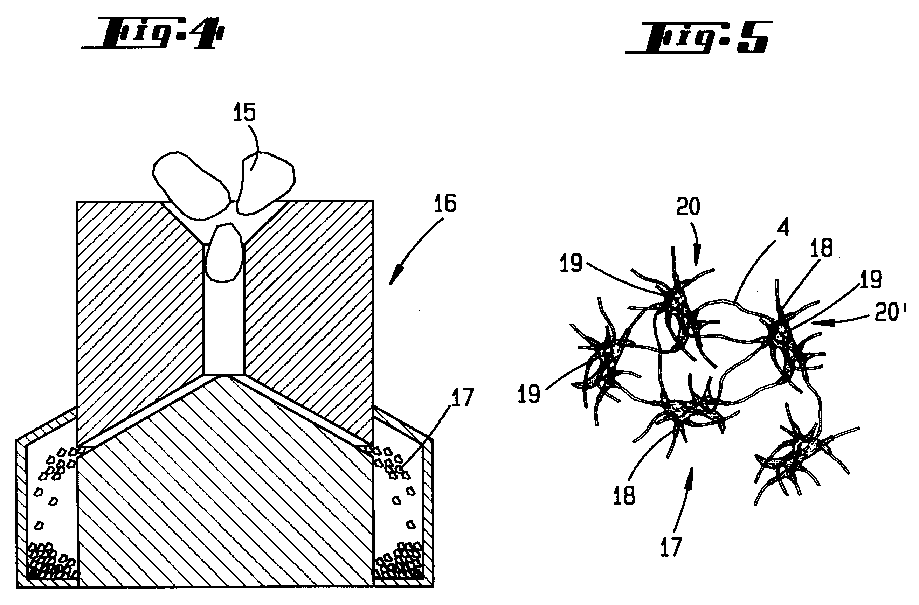

Es besteht jedoch auch die Möglichkeit, als Ausgangsmaterial zumindest teilweise ein aus einem recycleten Teppichboden gewonnenes Granulat zu nutzen. Ein zu recyclender Teppichboden 9 ist in der Figur 3 schematisch dargestellt. Dieser besitzt Polfäden 10, welche eine Florschicht bilden aus Polyamid 6 oder Polyamid 6.6. Diese Polfäden 10 sind in ein Trägermaterial 11 genadelt, welches ein Vlies oder Bändchengewebe aus Polypropylen sein kann. Eine erste Verfestigung der Polfäden 10 mit dem Primär-Trägermaterial 11 ist durch einen sogenannten Vorstrich 12 erreicht, der hier als Schicht übertrieben dick dargestellt ist. Der Vorstrich besteht aus Copolymeren von z.B. Ethylen-Vinylacetat-Copolymeren, Styrol-Butadien, Styrol-Acrylat und anderen. Das Trägermaterial 11 mit den darin vernadelten und verfestigten Polfäden 10 ist mittels einer Kaschierung 13, wie beispielsweise Polyethylen oder dergleichen, die hier auch aus Demonstrationsgründen als übertrieben dicke Schicht dargestellt ist, mit einem sogenannten textilen Zweitrücken 14, welcher beim Ausführungsbeispiel auf Basis Polypropylen ist, verbunden.

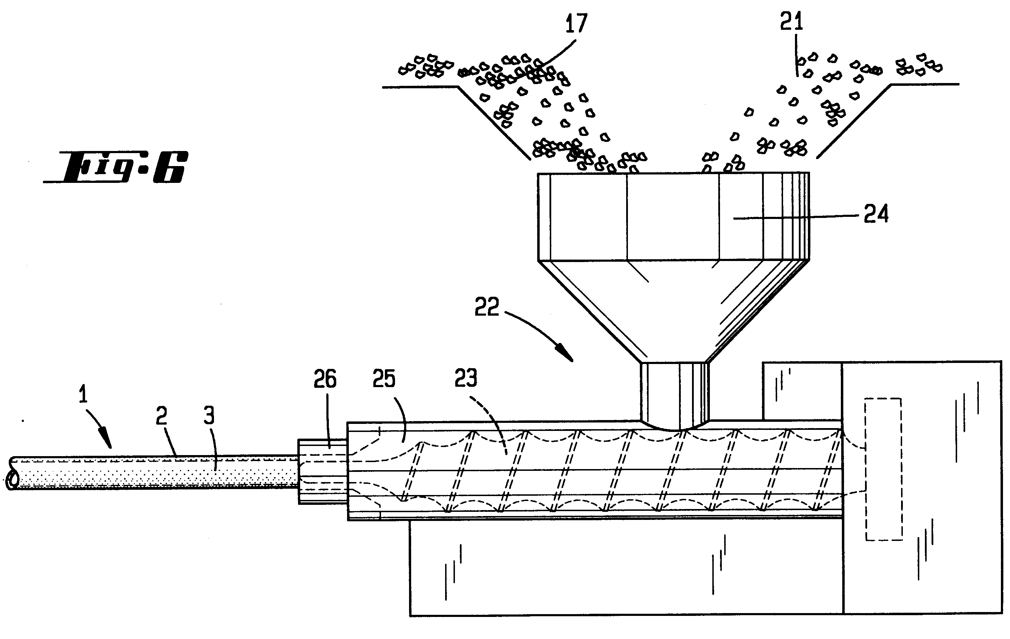

Zur Erzeugung eines Ausgangsmaterials zur Herstellung eines Kunststoffbauteiles 1, insbesondere eines Teppichrohres 2, wird der Teppichboden 1 zunächst, zerkleinert in Teppichbodenteile 15, in einen sogenannten Plastcompactor 16 gegeben (vgl. Figur 4). Dieser agglomeriert die Teppichbodenteile 15, wobei durch die - gegebenenfalls gesteuerte - Wärmeentwicklung die thermoplastischen Anteile aus Polyolefinen aufgeschmolzen werden, nicht jedoch die Polfäden 10 aus Polyamid. Als Ergebnis erhält man Granulatkörnchen 17. Das Granulat besteht makroskopisch aus einzelnen, trocken vorliegenden und insgesamt eine rieselfähige Substanz ergebenden Körnchen 17. Ein solches Körnchen 17 ist in Vergrößerung, jedoch schematisch, in Figur 5 dargestellt. Es ist ersichtlich, daß eine Vielzahl von Polyamid-Fasern 4 das insgesamt "faserige" Erscheinungsbild eines Körnchens 17 ausmachen. Die Polyamid-Fasern 4 sind untereinander verbunden durch niedrigschmelzende Kunststoffanteile, die teilweise hüllenartig, wie bei dem Bezugszeichen 18 beispielsweise dargestellt, die Polyamid-Fasern 4 verkleben. Es sind auch größere Anhäufungen, wie durch das Bezugszeichen 19 erläutert, der thermoplastischen Anteile gegeben. Es ergeben sich Fasergruppen 20, die aufgrund längerer Polyamid-Fasern 4, die mit anderen Fasergruppen 20' verbunden sind, durch Wirrlage sich zu einem Körnchen 17 verbinden.

Die gewünschten leitfähigen Bestandteile 8 innerhalb des Kunststoffbauteiles 1 können ebenfalls aus dem recycleten Teppichboden 9 gewonnen werden, sofern dieser innerhalb seiner Polfasern 10 leitfähige Substanzen enthält.

Das wie zuvor beschrieben gewonnene Granulat 17 wird bevorzugt mit sortenreinem Kunststoffgranulat 21, insbesondere Polyethylen-Granulat/Polypropylen-Granulat vermischt, nämlich etwa mit einem Anteil von 40 bis 70%, vorzugsweise 70%.

Zur Herstellung eines Kunststoffbauteiles 1, insbesondere eines Teppichrohres 2, welches angeschmolzene Anteile enthält, werden die Granulate 17 und 21 einem Extruder 22 zugeführt, welcher über eine rotierende Schnecke 23 die Granulate 17 und 21 aus einem Vorratsbehälter 24 in einen temperaturgeregelten Zylinder 25 einzieht. Die Temperatur liegt hierbei unterhalb des Schmelzpunktes von ca. 220°C für Polyamid, womit gewährleistet ist, daß hierbei die Polyamid-Fasern 4 im wesentlichen nicht aufgeschmolzen (gekrackt) werden. In Anbetracht der Temperatur im Extruder 22, die bei ca. 200 °C liegt, handelt es sich hierbei um im wesentlichen nicht geschmolzene Polyamid-Bestandteile. Die hohe Temperatur führt aber jedenfalls zu einer solchen Erweichung, daß eine Polyamid-Faser im Zuge der Durchsetzung durch den Extruder gleichsam zerkleinert wird und sich das Polyamid in dem Extrudat ziemlich homogen verteilt. Die Verteilung ist derart fein, daß die Polyamid-Anteile auch bei mikroskopischer Vergrößerung nicht einzeln identifizierbar sind. Dies gilt auch für die leitfähigen Bestandteile 8, welche aus Kohlenstoff-Fasern oder metallbedampften, leitfähigen Fasern auf Basis Polyamid bestehen können. Die anderen Kunststoffanteile aus Polypropylen, Ethylen-Vinylacetat-Copolymeren, Styrol-Butadien, Styrol-Acrylat oder dergleichen und auf Basis von Polyolefinen wie beispielsweise Polyethylen , Polypropylen oder dergleichen, werden aufgeschmolzen, wobei sich hierbei die hochtemperaturbeständigen Kunststoff-Anteile und die leitfähigen Bestandteile in der aufgeschmolzenen Kunststoffmasse homogen verteilen. Diese Kunststoffmasse wird durch eine profilgebende Düse 26 gedrückt. Als Extrudat ergibt sich hierbei ein wie in Figur 1 dargestelltes Teppichrohr 2, welches in seiner Wandung 3 eingelagerte Polyamid-Anteile und leitfähige Bestandteile 8 aufweist.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein.

## Patentansprüche

1. Kunststoffbauteil mit einer rutschfesten Oberfläche (6) gekennzeichnet durch in dem Kunststoffbauteil (1) enthaltene, niedrigschmelzende thermoplastische Anteile und durch, durch die thermoplastischen Anteile untereinander verbundene, teilweise geschmolzene, hochtemperaturbeständige Kunststoff-Fasern, wobei in dem Kunststoffbauteil im wesentlichen keine einzeln identifizierbaren Fasern zu erkennen sind und das Kunststoffbauteil (1) eine Vielzahl von Lufteinschlüssen aufweist, wobei weiter die Oberfläche durch eine Vielzahl von derartigen Lufteinschlüssen herrührende, mikroskopisch kleine Krater aufweist zur Bildung der rutschfesten Oberfläche (6).

2. Im Kunststoffspritzverfahren hergestelltes Kunststoffbauteil (1), enthaltend Anteile aus faserigem, hochtemperaturbeständigem Kunststoff, dadurch gekennzeichnet, daß das Ausgangsmaterial für das Spritzverfahren zumindest teilweise ein rieselfähiges Granulat (17) in Körnchenform ist, das erhalten wurde durch Zerstückeln von Teilen eines Teppichbodens (9), daß die so gewonnenen Einzelstücke (15) des zerstückelten Teppichs (9) in einen Plastcompactor (16) gegeben werden, wobei die Einzelstücke (15) unter Wärmeentwicklung zermahlen werden derart, daß niedrigschmelzende thermoplastische Anteile schmelzen, jedoch die hochtemperaturbeständigen Kunststoffanteile im wesentlichen nicht schmelzen und daß die geschmolzenen Anteile die faserigen Anteile miteinander zu den einzelnen agglomerierten Körnchen des Granulats (17) verbindet.

3. Kunststoffbauteil nach Anspruch 2, dadurch gekennzeichnet, daß die Einzelstücke des Teppichbodens (9) unter gesteuerter Wärmeentwicklung im Plastcompactor (16) zermahlen werden.

4. Kunststoffbauteil nach einem oder mehreren der Ansprüche 2 bis 3, dadurch gekennzeichnet, daß die Körnchen des Granulats aus durch niedrigschmelzende Kunststoffanteile untereinander verbundenen Fasern bestehen, daß die Fasern teilweise hüllenartig von den niedrigschmelzenden thermoplastischen Kunststoffanteilen umschlossen sind und teilweise durch größere niedrigschmelzende thermoplastische Kunststoffanteile zu Fasergruppen zusammengeklebt sind, welche ihrerseits durch längere Fasern in einer Wirrlage miteinander verbunden sind.

5. Kunststoffbauteile nach einem oder mehreren der Ansprüche 2 bis 4, dadurch gekennzeichnet, daß das Granulat (17) erhalten wurde durch Agglomeration in einem Plastcompactor (16) von Einzelstücken (15) eines Teppichbodens (9) mit einem Polmaterial auf Basis von Polyamid 6 oder Polyamid 6.6, vorzugsweise eines Trägermaterials (11) aus einem Polypropylen-Vlies oder Polypropylen-Bändchen-Gewebe, weiter vorzugsweise eines Vorstrichs (12) aus Ethylen-Vinylacetat-Copolymeren, Styrol-Butadien, Styrol- Acrylat oder dergleichen, weiter vorzugsweise eines Kaschierklebers (13) aus Polyethylen oder dergleichen und weiter vorzugsweise einer Rückenschicht (Zweitrücken 14) auf Basis von Polyolefinen, wie beispielsweise Polypropylen oder dergleichen.

6. Kunststoffbauteil nach einem oder mehreren der Ansprüche 2 bis 5, dadurch gekennzeichnet, daß das Granulat (17) leitfähige Bestandteile (8) enthält.

7. Kunststoffbauteil nach einem oder mehreren der Ansprüche 2 bis 6, dadurch gekennzeichnet, daß beim Spritzvorgang dem Granulat 40 % bis 70 %, vorzugsweise 70 %, sortenreiner Kunststoff, insbesondere Polyethylen/Polypropylen zugesetzt ist.

8. Kunststoffbauteil nach einem oder mehreren der Ansprüche 2 bis 7, dadurch gekennzeichnet, daß der Spritzvorgang bei einer Temperatur erfolgt, bei der die faserigen hochtemperaturbeständigen Kunststoffanteile angeschmolzen, mindestens erweicht werden derart, daß die Fasern im Zuge des Spritzvorganges zerkleinert und im Extrudat homogen verteilt werden.

9. Kunststoffbauteil nach einem oder mehreren der Ansprüche 2 bis 8, dadurch gekennzeichnet, daß im Zuge des Spritzvorganges die Fasern derart zerkleinert werden, daß bei dem fertiggestellten Kunststoffbauteil (1) keine einzeln identifizierbaren Fasern mehr erkennbar sind.

10. Kunststoffbauteil nach einem oder mehreren der Ansprüche 2 bis 9, dadurch gekennzeichnet, daß die Wandungen des Kunststoffbauteils (1) eine Vielzahl von Lufteinschlüssen aufweisen und daß die Oberfläche (6) eine Vielzahl von derartigen Lufteinschlüssen herrührende mikroskopisch kleine Krater aufweist.

## Claims

1. Plastic component having a slip-resistant surface (6) characterised by low-melting thermoplastic portions present in the plastic component (1) and by partially melted, high temperature-resistant plastic fibres bound to one another due to the thermoplastic portions, wherein essentially no individual identifiable fibres can be seen in the plastic component and the plastic component (1) has a plurality of air inclusions, wherein also the surface has microscopically small craters originating from a plurality of air inclusions of this type to form the slip-resistant surface (6).

2. Plastic component (1) produced by a plastic injection moulding process, containing portions of fibrous, high temperature-resistant plastic, characterised in that the starting material for the injection moulding process is at least partially pourable granules (17) in grain form which have been obtained by comminuting parts of carpeting (9), in that the individual pieces (15) of the comminuted carpet (9) thus obtained are added to a Plastic compactor (16), wherein the individual pieces (15) are ground with evolution of heat such that low-melting thermoplastic portions melt, but the high temperature-resistant plastic portions essentially do not melt and in that the molten portions bind the fibrous portions to one another to give the individual agglomerated grains of the granules (17).

3. Plastic component according to claim 2, characterised in that the individual pieces of the carpeting (9) are ground in a plastic compacter (16) with controlled evolution of heat.

4. Plastic component according to one or more of claims 2 to 3, characterised in that the grains of the granules consist of fibres bound to one another by low-melting plastic portions, in that the fibres are partially surrounded like a shell by the low-melting thermoplastic plastic portions and are partially adhered together by larger low-melting thermoplastic plastic portions to form fibre groups, which in turn are bound to one another by longer fibres in random orientation.

5. Plastic components according to one of more of claims 2 to 4, characterised in that the granules (17) have been obtained by agglomeration in a plastic compactor (16) of individual pieces (15) of carpeting (9) having a polar material based on polyamide 6 or polyamide 6.6, preferably a substrate material (11) of a polypropylene nonwoven or polypropylene tape fabric, also preferably a precoat (12) of ethylene-vinyl acetate copolymer, styrene-butadiene, styrene-acrylate or the like, also preferably a laminating adhesive (13) of polyethylene or the like and also preferably a backing layer (second backing 14) based on polyolefins, such as for example polypropylene or the like.

6. Plastic component according to one or more of claims 2 to 5, characterised in that the granules (17) contain conductive constituents (8).

7. Plastic component according to one or more of claims 2 to 6, characterised in that during the injection moulding process, 40 % to 70 %, preferably 70 %, of pure-type plastic, in particular polyethylene/polypropylene, are added to the granules.

8. Plastic component according to one or more of claims 2 to 7, characterised in that the injection moulding process takes place at a temperature at which the fibrous, high temperature-resistant plastic portions are partially melted, at least softened, such that the fibres are comminuted in the course of the injection moulding process and homogeneously distributed in the extrudate.

9. Plastic component according to one or more of claims 2 to 8, characterised in that the fibres are comminuted in the course of the injection moulding process such that individual identifiable fibres are no longer visible in the finished plastic component (1).

10. Plastic component according to one or more of claims 2 to 9, characterised in that the walls of the plastic component (1) have a plurality of air inclusions and in that the surface (6) has a plurality of microscopically small craters originating from air inclusions of this type.

## Revendications

1. Elément de construction en matière plastique, doté d'une surface (6) ayant des propriétés antidérapantes, caractérisé par des fractions thermoplastiques à faible point de fusion, contenu dans l'élément de construction en matière plastique (1) et par des fibres de matière plastique résistant aux hautes températures partiellement fondues liées les unes les autres par les fractions de matière thermoplastique, aucune fibre identifiable individuellement dans l'élément de construction en matière plastique ne pouvant être décelée et l'élément de construction en matière plastique (1) présentant une pluralité d'inclusions d'air, la surface présentant une pluralité de petits cratères de taille microscopique, résultant desdites inclusions d'air, afin de constituer la surface (6) antidérapante.

2. Elément de construction en matière plastique (1) fabriqué par un procédé de moulage par injection de matière plastique contenant des fractions de matière plastique résistant aux hautes températures, fibreuses, caractérisé en ce que les matières premières de l'opération d'injection est au moins partiellement un granulé (17) fluide, se présentant sous la forme de petits grains, ayant été obtenus par une fragmentation de morceaux de moquette (9), en ce que les morceaux individuels (15) ainsi obtenus de moquette fragmentée (19) sont introduits dans un compacteur à matière plastique (16), les morceaux individuels (15) étant broyés en farine avec dégagement de chaleur, en ce que les fractions thermoplastiques de bas point de fusion entrent en fusion, cependant que les fractions de matière plastique résistant aux hautes températures n'entrent pratiquement pas en fusion, et en ce que les fractions fondues agglomèrent les fractions fibreuses ensemble, pour donner les petits grains agglomérés individuels du granulé (17).

3. Elément de construction en matière plastique selon la revendication 2, caractérisé en ce que les morceaux individuels de moquette (9) sont broyés dans un compacteur à matière plastique (16) avec dégagement contrôlé de chaleur.

4. Elément de construction en matière plastique, selon une ou plusieurs des revendications 2 à 3, caractérisé en ce que les petits grains du granulé sont constitués de fibres reliées ensemble par des fractions de matière plastique à bas point de fusion, en ce que les fibres sont partiellement enrobées, comme dans un gaine, par les fractions en matière plastique de nature thermoplastique et à bas point de fusion et sont partiellement collées ensemble, pour former des groupes de fibres, au moyen des fractions en matière plastique de nature thermoplastique, plus grosses, à bas point de fusion, qui elles mêmes sont reliées ensemble par des fibres longues, en un enchevêtrement aléatoire.

5. Eléments de construction en matière plastique selon une ou plusieurs des revendications 2 à 4, caractérisés en ce que le granulé (17) a été obtenu par une agglomération dans un compacteur à matière plastique (16) de morceaux individuels (15) provenant d'un moquette (9) ayant un velours à base de polyamide 6 ou de polyamide 6.6, de préférence un matériau support (11) constitué d'un matelas de polypropylène ou d'un tissu de bandelettes de polypropylène, en outre de préférence d'une précouche (12) en copolymère éthylène-acétate de vinyle, en butadiène-styrène, acrylate-styrène ou analogue, en outre de préférence un adhésif de contrecollage (13) constitué de polyéthylène ou analogue, et en outre de préférence un dossier (deuxième couche support 14) à base de polyoléfines, tel que par exemple du polypropylène ou analogue.

6. Elément de construction en matière plastique selon une ou plusieurs des revendications 2 à 5, caractérisé en ce que le granulé (17) contient des composants (8) conducteurs.

7. Elément de construction en matière plastique selon une ou plusieurs des revendications 2 à 6, caractérisé en ce que, lors de l'opération d'injection, on ajoute au granulé de 40 % à 68 % de préférence 70 % d'une matière synthétique d'un type pur, en particulier polyéthylène/polypropylène.

8. Elément de construction en matière plastique selon une ou plusieurs des revendications 2 à 7, caractérisé en ce que l'opération d'injection s'effectue à une température à laquelle les fractions de matière plastique résistant aux hautes températures, fibreuses, sont mises en fusion, ou au moins ramollies de manière que les fibres au cours de l'opération d'injection soient rapetissées et réparties de façon homogène dans l'extrudat.

9. Elément de construction en matière plastique selon une ou plusieurs des revendications 2 à 8, caractérisé en ce qu'au cours de l'opération d'injection, les fibres sont rapetissées de manière que, dans l'élément de construction (1) terminé, aucune fibre identifiable individuellement ne puisse plus être décelée.

10. Elément de construction en matière plastique selon une ou plusieurs des revendications 2 à 9, caractérisé en ce que les parois de l'élément de construction en matière plastique (1) présentent une pluralité d'inclusions d'air, et en ce que la surface (6) présente une pluralité de petits cratères microscopiques résultant desdites inclusions d'air.
